# EUROPÄISCHE PATENTSCHRIFT

(11) **EP 1 636 288 B1**
(45) Veröffentlichungstag und Bekanntmachung des Hinweises auf die Patenterteilung: **21.12.2011**
(21) Anmeldenummer: 04735878.3
(22) Anmeldetag: 03.06.2004
(51) Int. Cl.: C08G 18/83, C08G 18/28, C08G 18/66, C09D 175/06

(54) **SELBSTVERNETZENDE WÄSSRIGE POLYURETHANDISPERSIONEN**
SELF-CROSSLINKING AQUEOUS POLYURETHANE DISPERSIONS
DISPERSIONS DE POLYURETHANE AQUEUSES AUTORETICULANTES

(30) Priorität: 13.06.2003 AT 9262003
(43) Veröffentlichungstag der Anmeldung: 22.03.2006
(73) Patentinhaber: Cytec Austria GmbH, 8402 Werndorf (AT)
(72) Erfinder: SCHAFHEUTLE, Markus, A-8044 Graz (AT); ARZT, Anton, A-8430 Neutillmitsch (AT); BURKL, Julius, A-8053 Graz (AT); GARBER, Gudrun, A-8503 St.Josef (AT); GSÖLL, Hannelore, A-8055 Graz (AT); JEDLICKA, Rudolf, A-2700 Wiener Neustadt (AT); NEUMAYER, Susanne, A-8020 Graz (AT); PETRITSCH, Gerlinde, A-8054 Graz (AT); PITTERMANN, Renate, A-8321 St. Margareten/Raab (AT); WANGO, Jörg, A-8142 Wundschuh (AT)
(74) Vertreter: Deckers, Hellmuth Alexander
(86) Internationale Anmeldenummer: PCT/EP2004/005992
(87) Internationale Veröffentlichungsnummer: WO 2004/111103

(56) Entgegenhaltungen:
- EP-A- 0 649 865
- EP-A- 0 844 261

## Beschreibung

Wäßrige Polyurethandispersionen, die ohne Zusatz von Härtern wie mehrfunktionellen Isocyanaten (bei Raumtemperatur oder leicht erhöhter Temperatur) oder Aminoplastharzen (üblicherweise bei Temperaturen von über 100 °C) zu vernetzten Lackfilmen gehärtet werden, sind bereits aus der Literatur bekannt. Aus der Anmeldung EP 0 844 261 A1 sind wäßrige Dispersionen von Polyurethanen bekannt, die beta-Carbonyl-Carboxamid-Strukturen aufweisen. Diese Polyurethane können mit Polyhydraziden vernetzt werden. In der EP-A 0 649 865 werden wäßrige Polyurethandispersionen beschrieben, die durch Pfropfung mit Acrylmonomeren, die Ketongruppen enthalten, funktionalisiert sind, und die mit in der Dispersion gelösten Dihydraziden wie Adipinsäuredihydrazid ohne Zusatz von externen Härtern vernetzen. Diese Dispersionen sind jedoch bezüglich ihres Trocknungsverhaltens noch nicht befriedigend.

Es besteht die Aufgabe, ähnliche Polyurethan-Dispersionen bereitzustellen, die rascher trocknen und bereits nach kurzer Zeit eine verbesserte chemische Beständigkeit aufweisen.

Die Aufgabe wird gelöst durch eine selbstvernetzende wäßrige Polyurethandispersion, enthaltend Polyurethanmoleküle mit lateral oder terminal gebundenen Carbonylgruppen.

Die Erfindung betrifft wäßrige Dispersionen von selbstvernetzenden Polyurethanen, enthaltend Bausteine abgeleitet von Polyisocyanaten **A**, Polyolen **B** mit einer zahlenmittleren molaren Masse Mₙ von mindestens 400 g/mol, gegebenenfalls niedermolekularen Polyolen C mit Mₙ unter 400 g/mol, Verbindungen D, die mindestens zwei gegenüber Isocyanatgruppen reaktive Gruppen und mindestens eine zur Anionenbildung befähigte Gruppe aufweisen, niedermolekularen Polyolen **E,** die gegenüber Isocyanatgruppen keine weiteren reaktiven Gruppen tragen, Verbindungen **F,** die mindestens eine gegenüber Isocyanat reaktive Gruppe und mindestens eine Aldehyd-oder Keton-artige Carbonylgruppe enthalten, Verbindungen **G,** die gegenüber Isocyanaten monofunktionell sind oder aktiven Wasserstoff unterschiedlicher Reaktivität enthalten und von den Verbindungen **E** verschieden sind, sowie gegebenenfalls Verbindungen **H,** die von **B, C, D, E, F** und **G** verschieden sind und mindestens zwei mit NCO-Gruppen reaktive Gruppen enthalten.

Die wäßrigen Dispersionen enthalten weiter ein Vernetzungsmittel **I** ausgewählt aus Diaminen **I1** und Dihydraziden **I2.**

Dabei sind die Carbonylgruppen in der Verbindung F eingebaut und im Polyurethan über eine zweiwertige Gruppe -X- an die Polymerkette gebunden, wobei die Gruppe -X- ausgewählt ist aus linearen oder verzweigten oder cyclischen Alkylengruppen oder Aralkylengruppen mit 3 bis 20 Kohlenstoffatomen, wobei die beiden Bindungsstellen nicht am selben C-Atom sein dürfen. Die gegenüber Isocyanaten reaktive Gruppe, ausgewählt aus Hydroxyl-, Amin- und Mercaptangruppen, kann dabei an einem aromatischen Kohlenstoffatom (z. B. eine phenolische Hydroxylgruppe) oder bevorzugt an einem aliphatischen Kohlenstoffatom gebunden sein.

Bevorzugt ist die Gruppe -X- ein 1,3- oder ein 1,4-Alkylenrest der Struktur
-CR¹R²-CR³R⁴-CR⁵R⁶- oder -CR¹R²-CR³R^{4_}CR⁵R⁶-CR⁷R⁸-,
wobei die Reste R¹ bis R⁸ untereinander verschieden oder gleich sein können, und auch derart miteinander verbunden sein können, daß eine cyclische Struktur entsteht, bevorzugt sind jedoch lineare Strukturen, beispielsweise Gruppen der Art
-CH₂-CH₂-CH₂- und CH₂-CH₂-C₂-CH₂-.

Bevorzugte Verbindungen **F** sind daher 1-(4-Hydroxyphenyl)-3-butanon und insbesondere 3-Acetyl-1-propanol, 4-Acetyl-1-butanol, und Dihydro-5-hydroxymethyl-2(3H)-furanon. R¹ bis R⁸ sind ausgewählt aus H-, -OH, Alkyl mit 1 bis 4 C-Atomen, -O-Alkyl mit 1 bis 4 C-Atomen und Halogenen.

Als Vernetzungsmittel **I** wird der wäßrigen Dispersion des Polyurethans ein Diamin **I1** und/oder ein Dihydrazid **I2** zugesetzt.

Die Erfindung betrifft weiter ein Verfahren zur Herstellung selbstvernetzender, in Wasser dispergierbarer Polyurethanharze gemäß Anspruch 1, umfassend die Schritte
- Synthese eines Isocyanat-funktionellen Präpolymeren durch Umsetzung von Polyisocyanaten **A** mit Polyolen **B** mit einer zahlenmittleren molaren Masse Mn mittleren Molekulargewicht Mₙ von mindestens 400, gegebenenfalls niedermolekularen Polyolen **C,** Verbindungen **F** mit einer Carbonylgruppe und Verbindungen **D,** die mindestens zwei gegenüber Isocyanatgruppen reaktive Gruppen und mindestens eine zur Anionenbildung befähigte Gruppe aufweisen, zu einem freie NCO-Gruppen enthaltenden Präpolymeren, das einen Staudinger-Index *J*₀ von mindestens 11 cm³/g, bevorzugt mindestens 13 cm³/g, und besonders bevorzugt mindestens 18 cm³/g aufweist,
- zumindest teilweise Neutralisation der zur Anionenbildung befähigten Gruppe der Verbindung **D** unter Bildung von anionischen Gruppen, Dispergierung dieses Präpolymeren in Wasser und
- Umsetzung des neutralisierten Präpolymeren mit mindestens einer der Komponenten ausgewählt aus niedermolekularen Polyolen **E,** die gegenüber Isocyanatgruppen keine weiteren reaktiven Gruppen tragen, wobei diese Verbindungen im Überschuß eingesetzt werden, Verbindungen **G,** die gegenüber Isocyanaten monofunktionell sind oder aktiven Wasserstoff unterschiedlicher Reaktivität enthalten und von den Verbindungen **E** verschieden sind, sowie gegebenenfalls Verbindungen **H,** die von **B, C, D, E, F** und **G** verschieden sind und mindestens zwei mit NCO-Gruppen reaktive Gruppen enthalten, und
- Zusatz eines Vernetzungsmittels **I** ausgewählt aus Diaminen **I**1 und Dihydraziden **I2.**

Die früher so bezeichnete "Grenzviskositätszahl", nach DIN 1342, Teil 2.4, "Staudinger-Index" *J*₀ genannt, ist der Grenzwert der Staudinger-Funktion *J*ᵥ bei abnehmender Konzentration und Schubspannung, wobei *J*ᵥ die auf die Massenkonzentration β_{B} = *m*_{B} / ***V*** des gelösten Stoffes B (mit der Masse *m*_{B} des Stoffes im Volumen V der Lösung) bezogene relative Viskositätsänderung ist, also *J*ᵥ = (ηᵣ - 1) / β_{B}. Dabei bedeutet ηᵣ - 1 die relative Viskositätsänderung, gemäß ηᵣ - 1 = (η-ηₛ) / ηₛ. Die relative Viskosität ηᵣ ist der Quotient aus der Viskosität η der untersuchten Lösung und der Viskosität ηₛ des reinen Lösungsmittels. (Die physikalische Bedeutung des Staudinger-Index ist die eines spezifischen hydrodynamischen Volumens des solvatisierten Polymerknäuels bei unendlicher Verdünnung und im Ruhezustand.) Die üblicherweise für *J* verwendete Einheit ist "cm³/g"; häufig auch "ml/g" oder "dl/g".

Die Erfindung betrifft weiter Lacke, die diese selbstvernetzenden wasserverdünnbaren Polyurethanharze als Bindemittel enthalten, wobei gegebenenfalls auch zusätzlich andere Bindemittel in Mischung mit diesen Polyurethanharzen eingesetzt werden können, und Beschichtungen, die mit diesen Lacken hergestellt werden.

Die Isocyanate **A** sind mindestens difunktionell und können ausgewählt werden aus aromatischen und aliphatischen linearen, cyclischen oder verzweigten Isocyanaten, insbesondere Diisocyanaten. Werden aromatische Isocyanate eingesetzt, so werden diese bevorzugt in Mischung mit den genannten aliphatischen Isocyanaten verwendet. Dabei ist der Anteil der aromatischen Isocyanate bevorzugt so zu wählen, daß die Anzahl der durch diese in die Mischung eingeführten Isocyanatgruppen zumindest 5 % geringer ist als die Anzahl der nach der ersten Stufe verbleibenden Isocyanatgruppen in dem erzeugten Präpolymer. Bevorzugt werden Diisocyanate, wobei bis zu 5 % von deren Masse durch trifunktionelle oder höherfunktionelle Isocyanate ersetzt werden kann.

Die Diisocyanate besitzen vorzugsweise die Formel Q(NCO)₂, wobei Q für einen Kohlenwasserstoffrest mit 4 bis 40 C-Atomen, insbesondere 4 bis 20 C-Atomen steht und vorzugsweise einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet. Beispiele derartiger bevorzugt einzusetzender Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat (Isophorondiisocyanat, IPDI), 4,4'-Diisocyanatodicyclohexylmethan, 4,4'-Diisocyanatodicyclohexylpropan-(2,2), 1,4-Diisocyanatobenzol, 2,4- oder 2,6-Diisocyanatotoluol bzw. Gemische dieser Isomeren, 4,4'-oder 2,4'-Diisocyanatodiphenylmethan, 4,4'-Diisocyanatodiphenylpropan-(2,2), p-Xylylendiisocyanat und α, α, α',α'-Tetramethyl-m- oder p-Xylylendiisocyanat sowie aus diesen Verbindungen bestehende Gemische.

Neben diesen einfachen Polyisocyanaten sind auch solche geeignet, die Heteroatome in dem die Isocyanatgruppen verknüpfenden Rest enthalten. Beispiele hierfür sind Polyisocyanate, die Carbodiimidgruppen, Allophanatgruppen, Isocyanuratgruppen, Urethangruppen, acylierte Harnstoffgruppen oder Biuretgruppen aufweisen. Bezüglich weiterer geeigneter Polyisocyanate sei beispielsweise auf die DE-A 29 28 552 verwiesen.

Geeignet sind auch "Lackpolyisocyanate" auf Basis von Hexamethylendiisocyanat oder von 1-Isocyanato-3,3,5-trimethyl-4-isocyanatomethyl-cyclohexan (IPDI) und/oder Bis(isocyanatocyclohexyl)-methan, insbesondere solche, welche ausschließlich auf Hexamethylendiisocyanat basieren. Unter "Lackpolyisocyanaten" auf Basis dieser Diisocyanate sind die an sich bekannten Biuret-, Urethan-, Uretdion- und/oder Isocyanuratgruppen aufweisenden Derivate dieser Diisocyanate zu verstehen, die im Anschluß an ihre Herstellung bei Bedarf in bekannter Weise, vorzugsweise durch Destillation von überschüssigem Ausgangsdiisocyanat bis auf einen restlichen Massenanteil von weniger als 0,5 % befreit worden sind. Zu den bevorzugten, erfindungsgemäß zu verwendenden aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 358 010, 3 903 126, 3 903 127 oder 3 976 622 erhalten werden können, und die aus Gemischen von N,N,N-Tris-(6-isocyanatohexyl)-biuret mit untergeordneten Mengen seiner höheren Homologen bestehen, sowie die den genannten Kriterien entsprechenden cyclischen Trimerisate von Hexamethylendiisocyanat, wie sie gemäß US-A 4 324 879 erhalten werden können, und die im wesentlichen auf N,N,N-Tris-(6-isocyanatohexyl)-isocyanurat im Gemisch mit untergeordneten Mengen an seinen höheren Homologen bestehen. Insbesondere bevorzugt werden den genannten Kriterien entsprechende Gemische aus Uretdion- und/oder Isocyanuratgruppen aufweisenden Polyisocyanaten auf Basis von Hexamethylendüsocyanat, wie sie durch katalytische Oligomerisierung von Hexamethylendiisocyanat unter Verwendung von Trialkylphosphanen entstehen. Besonders bevorzugt sind die zuletzt genannten Gemische einer Viskosität bei 23 °C von 50 bis 20 000 mPa·s und einer zwischen 2,0 und 5,0 liegenden NCO-Funktionalität.

Bei den erfindungsgemäß ebenfalls geeigneten, jedoch bevorzugt in Mischung mit den vorgenannten aliphatischen Polyisocyanaten einzusetzenden aromatischen Polyisocyanaten handelt es sich insbesondere um "Lackpolyisocyanate" auf Basis von 2,4-Diisocyanatotoluol oder dessen technischen Gemischen mit 2,6-Diisocyanatotoluol oder auf Basis von 4,4-Diisocyanatodiphenylmethan bzw. dessen Gemischen mit seinen Isomeren und/oder höheren Homologen. Derartige aromatische Lackpolyisocyanate sind beispielsweise die Urethangruppen aufweisenden Isocyanate wie sie durch Umsetzung von überschüssigen Mengen an 2,4-Diisocyanatotoluol mit mehrwertigen Alkoholen wie Trimethylolpropan und eventuell anschließender destillativer Entfernung des nicht umgesetzten Diisocyanat-Überschusses erhalten werden. Weitere aromatische Lackpolyisocyanate sind beispielsweise die Trimerisate der beispielhaft genannten monomeren Diisocyanate, d.h. die entsprechenden Isocyanato-isocyanurate, die eventuell im Anschluß an ihre Herstellung vorzugsweise destillativ von überschüssigen monomeren Diisocyanaten befreit worden sind. In den Mischungen von aromatischen und (cyclo-) aliphatischen Isocyanaten werden die Mengen dieser beiden Komponenten so gewählt, daß sichergestellt ist, daß die Isocyanatgruppen des Präpolymeren ausschließlich oder mindestens zu 90 % (cyclo-) aliphatisch gebunden sind.

Die Polyisocyanatkomponente **A** kann im übrigen aus beliebigen Gemischen der beispielhaft genannten Polyisocyanate bestehen.

Der Massenanteil an von den Polyisocyanaten **A** abgeleiteten Bausteinen in dem Polyurethanharz liegt in der Regel bei ca. 10 bis 50 %, vorzugsweise 20 bis 35 %, bezogen auf die Masse des Polyurethanharzes.

Die Polyole **B** besitzen vorzugsweise eine zahlenmittlere molare Masse Mₙ von 400 bis 5000 g/mol, insbesondere 800 bis 2000 g/mol. Ihre Hydroxylzahl beträgt im allgemeinen 30 bis 280 mg/g, vorzugsweise 40 bis 200 mg/g und insbesondere 50 bis 160 mg/g. Bevorzugt werden ausschließlich difunktionelle Polyole **B** eingesetzt; bis zu 5 % der Masse der Polyole **B** kann jedoch auch durch drei- oder höherwertige Polyole ersetzt werden.

Die Hydroxylzahl ist gemäß DIN 53 240 definiert als der Quotient derjenigen Masse ***m***_{KOH} an Kaliumhydroxid, die genausoviel Hydroxylgruppen aufweist wie eine zu untersuchende Probe, und der Masse ***m***_{B} dieser Probe (Masse des Feststoffes in der Probe bei Lösungen oder Dispersionen); ihre übliche Einheit ist "mg/g".

Beispiele für derartige Polyole, bei denen es sich um die aus der Polyurethanchemie bekannten Verbindungen handelt, sind Polyätherpolyole, Polyesterpolyole, Polycarbonatpolyole, Polyesteramidpolyole, Polyamidoamidpolyole, Epoxidharzpolyole und deren Umsetzungsprodukte mit CO₂, Polyacrylatpolyole und dergleichen. Derartige Polyole, die auch in Mischung eingesetzt werden können, sind beispielsweise in den DE-Offenlegungsschriften 20 20 905, 23 14 513 und 31 24 784 sowie in der EP-A 0 120 466 beschrieben. Es ist gleichfalls möglich, Ricinusöl als Polyolkomponente einzusetzen.

Von diesen Polyolen sind die Polyäther- und Polyesterpolyole bevorzugt, insbesondere solche, die nur endständige OH-Gruppen aufweisen und eine Funktionalität von kleiner als 3, vorzugsweise von 2,8 bis 2 und insbesondere von 2 besitzen.

Als Polyätherpolyole sind hier beispielsweise Polyoxyäthylenpolyole, Polyoxypropylenpolyole, Polyoxybutylenpolyole zu nennen und vorzugsweise Polytetrahydrofurane mit endständigen OH-Gruppen.

Die erfindungsgemäß besonders bevorzugten Polyesterpolyole sind die bekannten Polykondensate aus organischen Di- sowie gegebenenfalls Poly- (Tri-, Tetra-) Hydroxyverbindungen und Di- sowie gegebenenfalls Poly- (Tri-, Tetra-) Carbonsäuren oder Hydroxycarbonsäuren oder Lactonen. Anstelle der freien Polycarbonsäuren können auch die entsprechenden Polycarbonsäureanhydride oder entsprechende Polycarbonsäureester von niederen Alkoholen zur Herstellung der Polyester verwendet werden. Beispiele für geeignete Diole sind Äthylenglykol, 1,2-Butandiol, Diäthylenglykol, Triäthylenglykol, Polyallcylenglykole, wie Polyäthylenglykol, weiterhin 1,2- und 1,3-Propandiol, 1,4-Butandiol, 1,6-Hexandiol, Neopentylglykol oder Hydroxypivalinsäureneopentylglykolester. Als gegebenenfalls mit einzusetzende Polyole mit drei oder mehr Hydroxylgruppen im Molekül sind hier beispielsweise Trimethylolpropan, Trimethyloläthan, Glycerin, Erythrit, Pentaerythrit, Ditrimethylolpropan, Dipentaerythrit, Trimethylolbenzol oder Trishydroxyäthylisocyanurat zu nennen.

Als Dicarbonsäuren geeignet sind aromatische und cycloaliphatische Dicarbonsäuren, lineare und verzweigte Alkyl- und Alkenyl-Dicarbonsäuren sowie Dimerfettsäuren. Es kommen beispielsweise in Frage: Phthalsäure, Isophthalsäure, Terephthalsäure, Tetrahydrophthalsäure, Hexahydrophthalsäure, Cyclohexandicarbonsäure, Adipinsäure, Bernsteinsäure, Azelainsäure, Sebacinsäure, Glutarsäure, "Chlorendic"-Säure, Tetrachlorphthalsäure, Maleinsäure, Fumarsäure, Itaconsäure, Malonsäure, Korksäure, 2-Methylbernsteinsäure, 3,3-Diäthylglutarsäure, 2,2-Dimethylbernsteinsäure, Octenylbernsteinsäure und Dodecenylbernsteinsäure. Anhydride dieser Säuren sind ebenfalls brauchbar, soweit sie existieren. Die Anhydride werden hier durch den Ausdruck "Säure" mit umfaßt. Es können auch untergeordnete Mengen (Stoffmengenanteil bis zu 10 %, bezogen auf die Stoffmenge aller Säuren) von Monocarbonsäuren, wie Benzoesäure und Hexancarbonsäure verwendet werden. Gesättigte aliphatische oder aromatische Säuren sind bevorzugt, wie Adipinsäure oder Isophthalsäure. Als gegebenenfalls in kleineren Mengen mitzuverwendende Polycarbonsäuren seien hier Trimellithsäure, Trimesinsäure, Pyromellithsäure sowie Polyanhydride, wie in der DE-A 28 11 913 beschrieben, oder Mischungen zweier oder mehrerer solcher Verbindungen genannt.

Die Hydroxycarbonsäuren, die als Reaktionsteilnehmer bei der Herstellung eines Polyesterpolyols mit endständigen Hydroxylgruppen verwendet werden können, sind beispielsweise Hydroxycapronsäure, Hydroxybuttersäure, Hydroxydecansäure, Hydroxystearinsäure. Brauchbare Lactone, die bei der Synthese der Polyesterpolyole eingesetzt werden können, sind unter anderen Caprolacton, Butyrolacton und Valerolacton. Der Massenanteil an von der Komponente **B** abgeleiteten Bausteinen in dem Polyurethanharz liegt üblicherweise zwischen 15 und 80 %, vorzugsweise zwischen 40 und 60 %, bezogen auf die Masse des Polyurethanharzes.

Die gegebenenfalls zum Aufbau der Polyurethanharze eingesetzten niedermolekularen Polyole. C bewirken in der Regel eine Versteifung der Polymerkette. Sie besitzen im allgemeinen eine molare Masse von etwa 60 bis 400 g/mol, vorzugsweise 60 bis 200 g/mol und Hydroxylzahlen von 200 mg/g bis 1500 mg/g. Sie können aliphatische, alicyclische oder aromatische Gruppen enthalten. Ihr Massenanteil, soweit sie eingesetzt werden, liegt im allgemeinen bei 0,5 % bis 20 %, vorzugsweise 1 % bis 10 %, bezogen auf die Masse der Hydroxylgruppen enthaltenden Komponenten **B** bis **D.** Geeignet sind beispielsweise die niedermolekularen Polyole mit bis zu etwa 20 Kohlenstoffatomen je Molekül, z.B. Äthylenglykol,Diäthylenglykol, 1,2-Propandiol, 1,3-Propandiol, 1,4-butandiol, 1,2- und 1,3-Butylenglykol, 1,2- und 1,4-Cyclohexandiol, 1,4-Cyclohexandimethanol, 1,6-Hexandiol, Bisphenol A (2,2-Bis(4-hydroxyphenyl)propan), hydriertes Bisphenol A (2,2-Bis(4-hydroxycyclohexyl)propan) sowie deren Mischungen, sowie als Triole Trimethyloläthan und -propan. Bevorzugt werden ausschließlich oder zumindest überwiegend (in der Regel mehr als 90 % der Masse, bevorzugt mehr als 95 %) Diole eingesetzt.

Werden bei den Verbindungen **A, B,** und/oder **C** trifunktionelle oder höherfunktionelle Verbindungen eingesetzt, so ist darauf zu achten, daß beim Aufbau des Präpolymeren keine Vergelung eintritt. Dies kann beispielsweise dadurch verhindert werden, daß monofunktionelle Verbindungen gemeinsam mit den tri- oder höherfunktionellen Verbindungen eingesetzt werden, wobei die Menge der monofunktionellen Verbindungen dann vorzugsweise so zu wählen ist, daß die mittlere Funktionalität der betreffenden Komponente 2,3, bevorzugt 2,2, und insbesondere 2,1 nicht übersteigt.

Die anionogenen Verbindungen **D** enthalten mindestens eine, bevorzugt mindestens zwei mit Isocyanaten reaktive gruppen wie Hydroxyl-, Amino- und Mercaptan-Gruppen und mindestens eine Säuregruppe, die bei zumindest teilweiser Neutralisation in wäßriger Lösung oder Dispersion Anionen bildet. Solche Verbindungen sind beispielsweise in den US-Patentschriften 3 412 054 und 3 640 924 sowie in den DE-Offenlegungsschriften 26 24 442 und 27 44 544 beschrieben, auf die hier Bezug genommen wird. Insbesondere kommen hierfür solche Polyole, vorzugsweise Diole, in Frage, die wenigstens eine Carboxyl-Gruppe, im allgemeinen 1 bis 3 Carboxyl-Gruppen je Molekül enthalten. Als zur Anionenbildung befähigte Gruppen sind auch Sulfonsäuregruppen oder Phosphonsäuregruppen geeignet. Beispiele für Verbindungen **D** sind insbesondere Dihydroxycarbonsäuren, wie α,α-Dialkylolalkansäuren, insbesondere α,α-Dimethylolalkansäuren wie 2,2-Dimethylolessigsäure, 2,2-Dimethylolpropionsäure, 2,2-Dimethylolbuttersäure, 2,2-Dimethylolpentansäure und die isomeren Weinsäuren, weiterhin Polyhydroxysäuren, wie Glukonsäure. Besonders bevorzugt ist dabei 2,2-Dimethylolpropionsäure. Aminogruppenhaltige Verbindungen **D** sind beispielsweise 2,5-Diaminovaleriansäure (Ornithin) und 2,4-Diaminotoluolsulfonsäure-(5). Es können auch Gemische der genannten Verbindungen **D** zum Einsatz kommen. Der Massenanteil der von der Komponente **D** abgeleiteten Bausteine in dem Polyurethanharz liegt im allgemeinen bei 2 bis 20, vorzugsweise bei 4 bis 10 %, bezogen auf die Masse des Polyurethanharzes.

Die Verbindungen **E** befinden sich überwiegend, vorzugsweise zu. 70 bis 90 %, jeweils an den Kettenenden der Moleküle und schließen diese ab (Kettenstopper). Geeignete Polyole besitzen mindestens drei, vorzugsweise 3 oder 4 Hydroxylgruppen im Molekül. Genannt seien hier beispielsweise Glycerin, Hexantriol, Pentaerythrit, Dipentaerythrit, Diglycerin, Trimethyloläthan und Trimethylolpropan, wobei letzteres bevorzugt ist. Als Kettenstopper wird die Komponente **E** im Überschuß eingesetzt, also in einer solchen Menge, daß die Anzahl der Hydroxylgruppen in der eingesetzten Menge der Komponente **E** die der noch vorhandenen Isocyanatgruppen im Präpolymeren **ABCD** übersteigt. Der Massenanteil an von der Komponente **E** abgeleiteten Bausteine im Polyurethanharz liegt üblicherweise zwischen 2 % und 15 % , vorzugsweise 5 % bis 15 %, bezogen auf die Masse des Polyurethanharzes. Gegebenenfalls finden sich die von der Komponente **E** abgeleiteten Bausteine in Mischung mit den Bausteinen abgeleitet von **G** und/oder **H** im Polyurethanharz.

Die Verbindungen **G** sind monofunktionelle, mit NCO-Gruppen reaktive Verbindungen, wie Monoamine, insbesondere mono-sekundäre Amine, oder Monoalkohole. Genannt seien hier beispielsweise: Methylamin, Äthylamin, n-Propylamin, n-Butylamin, n-Octylamin, Laurylamin, Stearylamin, Isononyloxypropylamin, Dimethylamin, Diäthylamin, Di-n- und Diisopropylamin, Di-n-butylamin, N-Methylaminopropylamin, Diäthyl- und Dimethylaminopropylamin, Morpholin, Piperidin, bzw. geeignet substituierte Derivate davon, Amidoamine aus diprimären Aminen und Monocarbonsäuren, sowie Monoketimine von diprimären Aminen, und primär/tertiäre Amine, wie N,N-Dimethylaminopropylamin.

Vorzugsweise kommen für **G** auch Verbindungen in Betracht, die aktiven Wasserstoff mit gegenüber NCO-Gruppen unterschiedlicher Reaktivität enthalten, insbesondere Verbindungen, die neben einer primären Aminogruppe auch sekundäre Aminogruppen, oder neben einer OH-Gruppe auch COOH-Gruppen oder neben einer Aminogruppe (primär oder sekundär) auch OH-Gruppen aufweisen, wobei die letzteren besonders bevorzugt sind. Beispiele hierfür sind: primäre/sekundäre Amine, wie 3-Amino-1-methylaminopropan, 3-Amino-1-äthylaminopropan, 3-Amino-1-cyclohexylaminopxopan, 3-Amino-1-methylaminobutan; Mono-Hydroxycarbonsäuren, wie Hydroxyessigsäure, Milchsäure oder Äpfelsäure, weiterhin Alkanolamine wie N-Aminoäthyläthanolamin, Äthanolamin, 3-Aminopropanol, Neopentanolamin und besonders bevorzugt Diäthanolamin. Gegebenenfalls können auch solche Verbindungen **G** eingesetzt werden, die außer den gegenüber Isocyanatgruppen reaktiven Gruppen noch olefinische Doppelbindungen enthalten. Die so erhaltenen Polyurethane können nach dem Aufbringen auf ein Substrat durch Einwirkung von energiereicher Strahlung wie UV-Strahlen oder Elektronenstrahlen vernetzt werden.

Auf diese Weise können, ebenso wie bei der Verwendung der Verbindungen **E,** zusätzliche funktionelle Gruppen in das polymere Endprodukt eingebracht und dieses damit reaktionsfähiger gegenüber Härtern gemacht werden, falls dies gewünscht ist. Der Massenanteil an von der Komponente G abgeleiteten Bausteine in dem Polyurethanharz liegt üblicherweise zwischen 2 % und 20 %, vorzugsweise 3 % und 10 %, bezogen auf die Masse des Polyurethanharzes.

Die Verbindungen **H** sind die sogenannten Kettenverlängerer. Als solche kommen die hierfür bekannten, mit NCO-Gruppen reaktiven und vorzugsweise difunktionelle Verbindungen in Frage, die nicht identisch mit **B, C, D, E, F** und **G** sind und zumeist zahlenmittlere molare Massen bis zu 400 g/mol aufweisen. Genannt seien hier beispielsweise Wasser, Diamine wie Äthylendiamin, 1,3-Diaminopropan, 1,4-Diaminobutan, Hexamethylendiamin, wobei die Amine auch Substituenten, wie OH-Gruppen, tragen können. Solche Polyamine sind beispielsweise in der DE-Offenlegungsschrift 36 44 371 beschrieben. Der Massenanteil an von der Komponente **H** abgeleiteten Bausteine in dem Polyurethanharz liegt üblicherweise zwischen 1 % und 10 %, vorzugsweise 2 % und 5 %, bezogen auf die Masse des Polyurethanharzes.

Als Vernetzungsmittel **I** kommen Diamine **I1** in Betracht, die während des physikalischen Trocknens mit den Carbonylgruppen in dem Polyurethanharz unter Bildung von Schiffschen Basen reagieren. Ebenfalls geeignet sind Dihydrazide **I2** von Dicarbonsäuren, insbesondere von aliphatischen Dicarbonsäuren mit bevorzugt 2 bis 40 Kohlenstoffatomen wie Oxalsäure, Malonsäure, Bernsteinsäure, Adipinsäure oder von dimeren Fettsäuren.

Die Herstellung des erfindungsgemäßen Polyurethanharzes erfolgt bevorzugt in der Weise, daß man aus den Polyisocyanaten **A,** den Polyolen gemäß **B,** den Verbindungen **F** und gegebenenfalls den niedermolekularen Polyolen **C** sowie den Verbindungen **D** zunächst ein Polyurethan-Präpolymeres herstellt, das im Mittel mindestens 1,7, vorzugsweise 2 bis 2,5 freie Isocyanatgruppen pro Molekül enthält, dieses Präpolymere dann mit den Verbindungen **E** und/oder **G** gegebenenfalls in Abmischung mit geringen Mengen an Verbindungen **H,** in einem nicht-wäßrigen System umsetzt, wobei die Komponente **E** im stöchiometrischen Überschuß (Anzahl der Hydroxylgruppen in **E** ist größer als die Anzahl der Isocyanatgruppen in dem im ersten Schritt hergestellten Präpolymer) eingesetzt wird, und das vollständig ausreagierte Polyurethanharz vorzugsweise abschließend neutralisiert und ins wäßrige System überführt. Gegebenenfalls kann auch die Umsetzung mit **G** nach der Überführung ins wäßrige System erfolgen. Das Präpolymer soll dabei bereits hochmolekular sein, bevorzugt weist es einen Staudinger-Index *J*₀ von mindestens 11 cm³/g, bevorzugt mindestens 13 cm³/g und besonders bevorzugt mindestens 18 cm³/g auf.

Die Herstellung des Polyurethan-Präpolymeren im ersten Schritt erfolgt dabei nach den bekannten Verfahren. Hierbei wird das mehrfunktionelle Isocyanat **A** gegenüber den Polyolen **B** bis **D** im Überschuß eingesetzt, so daß ein Produkt mit freien Isocyanatgruppen resultiert. Diese Isocyanatgruppen sind end- und/oder seitenständig, vorzugsweise endständig. Zweckmäßigerweise ist dabei die Menge an Polyisocyanat **A** so groß, daß das Verhältnis der Anzahl von Isocyanatgruppen in der eingesetzten Menge der Komponente A zur Gesamtzahl der OH-Gruppen in den eingesetzten Polyolen **B** bis **D** 1,05 bis 1,4, vorzugsweise 1,1 bis 1,3 beträgt.

Die Umsetzung zur Herstellung des Präpolymeren wird normalerweise bei.Temperaturen von 55 °C bis 95 °C, vorzugsweise 60 °C bis 75 °C, je nach Reaktivität des eingesetzten Isocyanats, durchgeführt, in der Regel ohne Anwesenheit eines Katalysators, jedoch vorzugsweise in Gegenwart von gegenüber Isocyanaten inaktiven Lösungsmitteln. Hierfür kommen insbesondere solche Lösungsmittel in Betracht, die mit Wasser verträglich sind, wie die weiter unten genannten Äther, Ketone und Ester sowie N-Methylpyrrolidon. Der Massenanteil dieses Lösungsmittels überschreitet zweckmäßigerweise nicht 30 %, und liegt vorzugsweise im Bereich von 5 % bis 20 %, jeweils bezogen auf die Summe aus den Massen des Polyurethanharzes und des Lösungsmittels. Zweckmäßigerweise wird dabei das Polyisocyanat der Lösung der übrigen Komponenten zugegeben. Es besteht jedoch ebenfalls die Möglichkeit, zunächst das Polyisocyanat **A** zu dem Polyol **B,** den Verbindungen **F** und gegebenenfalls **C** zuzugeben und das so erzeugte Präpolymer **ABFC** mit der Komponente **D,** die in einem gegenüber Isocyanaten inaktiven Lösungsmittel, vorzugsweise N-Methylpyrrolidon oder Ketone, gelöst ist, zu dem Präpolymer **ABFCD** umzusetzen.

Das Präpolymere **ABFCD** bzw. dessen Lösung wird dann mit Verbindungen gemäß **E** und/oder **G,** gegebenenfalls in Abmischung mit **H,** umgesetzt, wobei die Temperatur zweckmäßigerweise im Bereich von 50 °C bis 160 °C, vorzugsweise zwischen 70 °C und 140 °C liegt, bis der NCO-Gehalt in der Reaktionsmischung praktisch auf Null abgesunken ist. Falls die Verbindung **E** eingesetzt wird, so wird diese im Überschuß (Anzahl der Hydroxylgruppen in **E** übersteigt die Anzahl der Isocyanatgruppen im Präpolymer **ABFCD**) zugegeben. Die Menge an **E** liegt dabei zweckmäßigerweise so, daß das Verhältnis der Anzahl von NCO-Gruppen im Präpolymeren **ABFCD** bzw. des vorher gegebenenfalls schon mit Verbindungen gemäß **G** und/oder **H** umgesetzten Präpolymeren **ABFCD(G/H)** zur Anzahl der reaktiven Gruppen von **E** 1:1,05 bis 1:5, vorzugsweise 1:1 bis 1:3 beträgt. Die Masse an **G** und/oder **H** kann dabei 0 % bis 90 %, vorzugsweise 2 % bis 20 %, bezogen auf die Masse von **E** betragen.

Ein Teil der in dem so hergestellten Polyurethan gebundenen (nicht neutralisierten) Säuregruppen, vorzugsweise 5 % bis 30 %, kann gegebenenfalls mit difunktionellen mit Säuregruppen reaktiven Verbindungen, wie Diepoxiden, umgesetzt werden.

Zur Neutralisation des resultierenden, vorzugsweise COOH-Gruppen enthaltenden Polyurethans sind insbesondere tertiäre Amine geeignet, z.B. Trialkylamine mit 1 bis 12, vorzugsweise 1 bis 6 C-Atomen in jedem Alkylrest. Beispiele hierfür sind Trimethylamin, Triäthylamin, Methyldiäthylamin, Tripropylamin. Die Alkylreste können beispielsweise auch Hydroxylgruppen tragen, wie bei den Dialkylmonoallcanol-; Alkyldialkanol- und Trialkanolaminen. Ein Beispiel hierfür ist Dimethyläthanolamin, das bevorzugt als Neutralisationsmittel dient.

Wird die Kettenverlängerung in organischer Phase durchgeführt, oder werden Neutralisation und Kettenverlängerung zusammen mit der Dispergierung in einem Schritt durchgeführt, so sind als Neutralisationsmittel gegebenenfalls auch anorganische Basen, wie Ammoniak oder Natrium- bzw. Kaliumhydroxid einsetzbar.

Das Neutralisationsmittel wird zumeist in solchen Mengen eingesetzt, daß das Verhältnis der Stoffmenge von Amingruppen bzw. in wäßriger Lösung gebildeten Hydroxylionen zur Stoffmenge der Säuregruppen des Präpolymeren ca. 0,3:1 bis 1,3:1, vorzugsweise ca. 0,5:1 bis 1:1 1 beträgt.

Die Neutralisation, die in der Regel zwischen Raumtemperatur und 110 °C erfolgt, kann in beliebiger Weise durchgeführt werden, z.B. so, daß das wasserhaltige Neutralisationsmittel dem Polyurethanharz zugegeben wird oder umgekehrt. Es ist aber auch möglich, daß man zuerst das Neutralisationsmittel dem Polyurethanharz zufügt und danach erst das Wasser. Im allgemeinen erhält man so einen Festkörper-Massenanteil in der Dispersion von 20 % bis 70 %, bevorzugt 30 % bis 50 %.

Das erfindungsgemäße Polyurethanharz eignet sich als Alleinbindemittel oder auch in Mischung mit anderen Bindemitteln wie den üblichen nicht selbstvernetzenden Polyurethanharzen oder anderen wäßrigen physikalisch trocknenden oder durch Zusatz von bei Raumtemperatur oder erhöhter Temperatur wirksamen Härtern vernetzten Bindemitteln zur Formulierung von wäßrigen Beschichtungsmitteln. Der Massenanteil an dem erfindungsgemäßen Polyurethanharz in dem wäßrigen Beschichtungsmittel beträgt im allgemeinen 5 % bis 40 %, vorzugsweise 15 % bis 30 %, bezogen auf die Masse des gesamten Beschichtungsmittels.

Es ist ebenfalls möglich, bei Verwendung des erfindungsgemäßen Polyurethanharzes als Alleinbindemittel Härter wie mehrfunktionelle Isocyanate (Härtung bei Raumtemperatur oder leicht erhöhter Temperatur) zuzugeben, um die Härtungsgeschwindigkeit zu erhöhen. Auch die Formulierung als wärmehärtendes Ein-Komponenten-Bindemittel mit Aminharzen oder blockierten Isocyanaten als Härter ist möglich und vorteilhaft.

Zur Formulierung von wäßrigen Beschichtungsmitteln werden der wäßrigen Dispersion des Polyurethanharzes die üblichen Hilfs- und Zusatzmittel der Lacktechnologie einverleibt. Hierzu gehören zum Beispiel Entschäumungsmittel, Verlaufshilfsmittel, Pigmente und Dispergierhilfsmittel für die Pigmentverteilung.

Die so erhaltenen erfindungsgemäßen Überzugsmittel eignen sich für praktisch alle Einsatzgebiete, in denen heute lösungsmittelhaltige, lösungsmittelfreie oder andersartige wäßrige Anstrich- und Beschichtungssysteme mit einem erhöhten Eigenschaftsprofil Verwendung finden, wobei die zu beschichtenden Substrate zum Beispiel aus Metall, mineralischen Baustoffen, wie Kalk, Zement oder Gips, Faser-Zement-Baustoffe, Beton, Holz oder Holzwerkstoffen, Papier, Asphalt, Bitumen, Kunststoffen diverser Art, Textilien oder Leder bestehen können. Bei den metallenen Substraten handelt es sich in allen Fällen bevorzugt um Automobile.

In den nachfolgenden Beispielen wird die Erfindung erläutert. Darin bedeuten ebenso wie im vorhergehenden Text alle Angaben mit der Einheit "%" Massenanteile (Quotient der Masse des betreffenden Stoffes und der Masse der Mischung in cg/g), soweit nicht anders angegeben. Konzentrationsangaben in "%" sind Massenanteile des gelösten Stoffes in der Lösung (Masse des gelösten Stoffes, dividiert durch die Masse der Lösung in cg/g).

### Beispiel 1: Polyesterdiol

In einem 4 L-Dreihalskolben mit Füllkörperkolonne wurden 322 g Dimerfettsäure (®Pripol 1009), 1199 g 1,6-Hexandiol, 740,4 g Adipinsäure, 446,3 g Isophthalsäure und 91,5 g Trimethylolpropan vorgelegt und auf 100 °C erwärmt. Dabei schmolzen die Reaktanden auf. Bei dieser Temperatur wurde 0,5 g Dibutylzinnoxid zugegeben, die Mischung wurde weiter erhitzt, bis bei ca. 150 °C eine Destillation einsetzte. Es wurde bei steigender Temperatur bis 220 °C so lange weiterdestilliert, bis die Säurezahl des Harzes unter 10 mg/g lag. Dann wurde der Druck im Reaktionsgefäß auf ca. 100 hPa (ca. 100 mbar) vermindert und so lange gehalten, bis die Säurezahl unter 2 mg/g lag. Man erhielt ein viskoses Harz mit einer Hydroxylzahl von ca. 113 mg/g und einem Staudinger-Index (gemessen in Chloroform) von ca. 9,6 cm³/g.

### Beispiel 2: Polycarbonatdiol

In einen 2 L-Dreihalskolben mit Füllkörperkolonne wurden 493 g Diäthylenglykol und 1084 g 1,6-Hexandiol vorgelegt und unter Stickstoffatmosphäre auf 150 °C erhitzt. Bei dieser Temperatur wurden unter Schutzgas 1,3 g Tetraisopropyltitanat zugegeben und dann die Mischung weiter auf 200 °C erwärmt. Bei konstanter Temperatur wurden 1091 g Dimethylcarbonat submers zudosiert. Dabei wurde die Zugabegeschwindigkeit so geregelt, daß die Kolonnenkopftemperatur 62,5 °C nicht überstieg. Nach Beendigung der Zugabe wurde noch eine Stunde weiter bei 200 °C gehalten. Dann wurde die Guttemperatur auf 180 °C gesenkt und eine weitere Stunde unter reduziertem Druck von ca. 100 hPa (ca. 100 mbar) gehalten. Man erhielt ein viskoses Harz mit einer Hydroxylzahl von 170 mg/g.

### Beispiel 3: selbstvemetzende Polyesterurethandispersion

In einem 2 L-Dreihalskolben mit Rückflußkühler und Dosiereinrichtung wurden 192,6 g des Polyesterdiols aus Beispiel 1, 3 0,7 g Dimethylolpropionsäure und 37,7 g 3-Acetyl-1-propanol vorgelegt und bei 120 °C homogen gemischt. In diese homogene Mischung wurden 51,6 g Toluylendiisocyanat so zudosiert, daß die Guttemperatur nie 124 °C überstieg. Nach Dosierende wurde so lange bei 115 bis 120 °C weitergerührt, bis der Massenanteil an freien Isocyanatgruppen unter 0,04 % lag. Dann wurden 63,4 g Isophorondiisocyanat zugegeben und weiter so lange bei 115 bis 120 °C gehalten, bis der Massenanteil an freien Isocyanatgruppen wiederum unter 0,04 % gesunken war. Nach Abkühlen des Harzes auf 95 °C wurde eine Lösung von 11,7 g Ammoniakwasser (25 %ig in wäßriger Lösung) in 480 g vollentionisiertem Wasser mit einer Temperatur von 70 bis 80 °C innerhalb von dreißig Minuten zudosiert und dabei das Harz dispergiert. Nach einer Nachrührphase von einer Stunde bei 80 °C wurden 26 g Adipinsäuredihydrazid zugegeben und ebenfalls 30 Minuten eingerührt. Nach dem Abkühlen auf Raumtemperatur und einer Filtration über ein 25 µm-Vliesfilter erhielt man eine feinteilige Dispersion (Teilchengröße ca. 35 nm) mit einem Festkörper-Massenanteil von 42 %, einer Säurezahl von ca. 15 mg/g, einer Aminzahl von ca. 8,5 mg/g, einer dynamischen Viskosität von ca. 360 mPa·s und einem pH-Wert von 7,4, gemessen an einer Dispersion mit einem Festkörper-Massenanteil von 10 %.

### Beispiel 4: selbstvernetzende hochmolekulare Polyesterurethandispersion

In einem 2 L-Dreihalskolben mit Rückflußkühler und Dosiereinrichtung wurden 192,6 g des Polyesterdiols aus Beispiel 1, 30,7 g Dimethylolpropionsäure und 37,7 g 3-Acetyl-1-propanol vorgelegt und bei 120 °C homogen gemischt. In diese homogene Mischung wurden 51,6 g Toluylendiisocyanat so zudosiert, daß die Guttemperatur nie 124 °C überstieg. Nach Dosierende wurde so lange bei 115 bis 120 °C weitergerührt, bis der Massenanteil an freien Isocyanatgruppen unter 0,04 % lag. Dann wurden 78,4 g Isophorondiisocyanat zugegeben und weiter so lange bei 115 bis 120 °C gehalten, bis der Massenanteil an freien Isocyanatgruppen wiederum bei 0,6 % lag. Nach Abkühlen des Harzes auf 95 °C wurden 17,4 g Triäthylamin zugegeben und die Mischung fünfzehn Minuten verrührt. Mit 727 g vollentionisiertem Wasser mit einer Temperatur von 70 bis 80 °C wurde das Harz innerhalb von ca. zehn Minuten dispergiert. Nach einer Nachrührphase von weiteren zehn Minuten bei 70 bis 80 °C wurde innerhalb von zehn Minuten eine Lösung von 1,57 g Äthylendiamin in 23,2 g vollentionisiertem Wasser zudosiert und verrührt. Nach einer Nachrührphase von einer Stunde wurden 26 g Adipinsäuredihydrazid zugegeben und ebenfalls 30 Minuten eingerührt. Nach dem Abkühlen auf Raumtemperatur und einer Filtration über ein 25 µm-Vliesfilter erhielt man eine feinteilige Dispersion (Teilchengröße ca. 24 nm) mit einem Festkörper-Massenanteil von 34 %, einer Säurezahl von ca. 12,5 mg/g, einer Aminzahl von ca. 10,3 mg/g, einer dynamischen Viskosität von ca. 93 mPa·s und einem pH-Wert von 7,9, gemessen an einer Dispersion mit einem Festkörper-Massenanteil von 10 %.

### Beispiel 5: selbstvernetzende Polyearbonaturethandispersion

In einem 2 L-Dreihalskolben mit Rückflußkühler und Dosiereinrichtung wurden 184,5 g des Polycarbonatdiols aus Beispiel 2, 14,3 g Dimethylolpropionsäure, 4 g Trimethylolpropan und 33,6 g 3-Acetyl-1-propanol vorgelegt und bei 120 °C homogen gemischt. In diese homogene Mischung wurde 95,3 g Hexamethylendiisocyanat so zudosiert, daß die Guttemperatur nie 124 °C überstieg. Nach Dosierende wurde so lange bei 115 bis 120 °C weitergerührt, bis der Massenanteil an freien Isocyanatgruppen unter 0,04 % lag. Nach Abkühlen des Harzes auf 95 °C wurden 5,7 g Dimethyläthanolamin zugegeben und zwanzig Minuten eingerührt. Mit 280 g vollentionisiertem Wasser mit einer Temperatur von 70 bis 80 °C wurde das Harz innerhalb 30 bis 45 Minuten dispergiert. Nach einer Nachrührphase von zwanzig Minuten bei 70 bis 80 °C wurden 23,2 g Adipinsäuredihydrazid zugegeben und ebenfalls 30 Minuten eingerührt. Nach dem Abkühlen auf Raumtemperatur und Filtration über ein 25 µm-Vliesfilter erhielt man eine feinteilige Dispersion (Teilchengröße ca. 66 nm) mit einem Festkörper-Massenanteil von 41 %, einer Säurezahl von ca. 7,4 mg/g, einer Aminzahl von ca. 6,4 mg/g, einer dynamischen Viskosität von ca. 840 mPa·s und einem pH-Wert von 7,8, gemessen an einer Dispersion mit einem Festkörper-Massenanteil von 10 %.

### Beispiel 6: selbstvemetzende ölbasierende Polyurethandispersion

In einem 1 L-Dreihalskolben mit Rückflußkühler und Dosiereinrichtung wurden 90 g Rizinusöl, 18,2 g Dimethylolpropionsäure, 22,3 g 3-Acetyl-1-propanol und 13,4 g N-Methylpyrrolidon vorgelegt und bei 120 °C homogen gemischt. In diese homogene Mischung wurde 30,5 g Toluylendiisocyanat so zudosiert, daß die Guttemperatur nie 124 °C überstieg. Nach Dosierende wurde so lange bei 115 bis 120 °C weitergerührt, bis der Massenanteil an freien Isocyanatgruppen unter 0,04 % lag. Dann wurden 37,5 g Isophorondiisocyanat zugegeben und weiter so lange bei 115 bis 120 °C gehalten, bis der Massenanteil an freien Isocyanatgruppen wiederum bei 0,6 % lag. Nach Abkühlen des Harzes auf 95 °C wurde eine Lösung von 6,9 g Ammoniakwasser (25 %ig in wäßriger Lösung) in 292 g vollentionisiertem Wasser mit einer Temperatur von 70 bis 80 °C innerhalb 30 bis 45 Minuten zudosiert und dabei das Harz dispergiert. Nach einer Nachrührphase von dreißig Minuten bei 70 bis 80 °C wurden 15,4 g Adipinsäuredihydrazid zugegeben und ebenfalls dreißig Minuten eingerührt. Nach dem Abkühlen auf Raumtemperatur und einer Filtration über ein 25 µm-Vliesfilter erhielt man eine feinteilige Dispersion (Teilchengröße ca. 124 nm) mit einem Festkörper-Massenanteil von 33,5 %, einer Säurezahl von ca. 15,2 mg/g, einer Aminzahl von ca. 8,4 mg/g, einer dynamischen Viskosität von ca. 6500 mPa·s und einem pH-Wert von 7,0, gemessen an einer Dispersion mit einem Festkörper-Massenanteil von 10 %.

Zum Vergleich wurde eine Polyesterurethandispersion hergestellt, die mit Ketongruppenhaltigen Acrylmonomeren gepfropft war und ebenfalls Adipinsäuredihydrazid als Vernetzungsmittel enthielt:

### Beispiel 7 (Vergleich)

232,0 g eines Polyesters, hergestellt aus Hexandiol-1,6, Isophthalsäure und Adipinsäure, mit einer Hydroxyl-Zahl von 88 mg/g und einer Säurezahl unter 2 mg/g wurden mit 23,0 g Dimethylolpropionsäure, 10,9 g Hexandiol-1,6 und 82,8 g N-Methylpyrrolidon-2 auf 90 °C erwärmt. Anschließend wurden über einen Zeitraum von 25 bis 30 Minuten unter Rühren 73,9 g Isophorondiisocyanat zudosiert. Nach weiteren sechzig Minuten wurden bei einer Temperatur von 90 °C 80,0 g Methylmethacrylat und 0,2 g 2,6-Di-tert.-butyl-4-methylphenol rasch zugegeben und die Mischung wurde homogenisiert. Danach wurden 41,3 g Isophorondiisocyanat über einen Zeitraum von zehn Minuten zudosiert, die Mischung wurde so lange bei 90 °C gerührt, bis der Massenanteil an freien Isocyanatgruppen 1,11%, bezogen auf die Masse der Reaktionsmischung betrug. In die so erhaltene Präpolymer-Lösung wurden 18,9 g 2-Hydroxyäthylmethacrylat gegeben. Es wurde weiter umgesetzt, bis keine freien Isocyanatgruppen mehr nachweisbar waren. Nach Zugabe von weiteren 37,3 g Methylmethacrylat, 16,0 g Diacetonacrylamid und 11,4 g Dimethyläthanolamin wurden 658,0 g Wasser mit einer Temperatur von 70 °C zu der Präpolymer-Lösung unter intensivem Rühren gegeben. Anschließend wurden bei einer Temperatur von 80 °C 0,7 g tert.-Butylhydroperoxid (als 80 %ige Lösung) rasch zugetropft. Nach weiteren dreißig Minuten wurde eine Lösung von 1,3 g Ascorbinsäure und 130,0 g Wasser über einen Zeitraum von neunzig Minuten zudosiert.

Die resultierende Polyurethan-Acryl-Hybrid-Dispersion wurde auf Raumtemperatur (23°C) abgekühlt und durch ein 5 µm-Filtergewebe filtriert. Anschließend wurden 8,2 g Adipinsäuredihydrazid, gelöst in 100 g Wasser, unter Rühren zugegeben. Die Dispersion besaß einen Festkörper-Massenanteil von 36 % und einen pH-Wert von 7,5.

**Tabelle 1: Vergleich der anwendungsstechnischen Eigenschaften**

| | Dispersion aus Beispiel 6 | Dispersion aus Beispiel 7 (Vergleich) |
|---|---|---|
| Festkörper-Massenanteil: | ca. 34 % | ca. 36 % |
| Prüfung auf Glas, 150 µm Naßfilm | | |
| Staubfreizeit* | 20 min | 30 min |
| Klebfreizeit + | 60 min | 55 min |
| Film | i. O. | i. O. |
| Pendelhärte n. DIN EN ISO 1522 | | |
| n. 24 Stunden / RT | 70 s | 50 s |
| n. 1 Woche /RT | 125 s | 90 s |
| | | |
| Beständigkeiten auf Glas n.96 h / RT | | |
| Aceton | 15 s | 15 s |
| Äthanol | 65 s | 20 s |
| VE-Wasser | Stunden | 10 min |

| | | |
|---|---|---|
| * Staubfreizeit: Bestimmung als die Zeit nach Applikation des Lacks, ab der beim Überstreichen der Lackoberfläche mit einer trockenen sauberen Fingerkuppe ohne Andruck keine Spur mehr zurückbleibt +Klebfreizeit (Holzlacke): Bestimmung als die Zeit nach Applikation des Lacks, ab der beim leichten Andruck auf die Lackoberfläche mit einer trockenen sauberen Fingerkuppe keine Spur mehr zurückbleibt RT: Raumtemperatur (20 °C) VE-Wasser: voll entsalztes Wasser Film: i.O. bedeutet, daß mit dem unbewaffneten Auge keine Unregelmäßigkeit wie Stippen, Trübungen etc. erkennbar waren | | |

## Patentansprüche

1. Selbstvernetzende wäßrige Polyurethandispersionen enthaltend ein Vernetzungsmittel **I** ausgewählt aus Diaminen **I1** und Dihydraziden **I2** und Polyurethane mit Bausteinen abgeleitet von Polyisocyanaten **A,** Polyolen **B** mit einer zahlenmittleren molaren Masse Mₙ von mindestens 400 g/mol, Verbindungen **D,** die mindestens zwei gegenüber Isocyanatgruppen reaktive Gruppen und mindestens eine zur Anionenbildung befähigte Gruppe aufweisen, niedermolekularen Polyolen **E,** die gegenüber Isocyanatgruppen keine weiteren reaktiven Gruppen tragen, Verbindungen **F,** die mindestens eine gegenüber Isocyanat reaktive Gruppe und mindestens eine Aldehyd- oder Keton-artige Carbonylgruppe enthalten, Verbindungen **G,** die gegenüber Isocyanaten monofunktionell sind oder aktiven Wasserstoff unterschiedlicher Reaktivität enthalten und von den Verbindungen **E** verschieden sind, **dadurch gekennzeichnet, daß** die in der Verbindung **F** eingebauten Carbonylgruppen im Polyurethan über eine Gruppe -X- an die Polymerkette gebunden sind, daß die Gruppe -X- ausgewählt ist aus linearen oder verzweigten oder cyclischen Alkylengruppen oder Aralkylengruppen mit mindestens 3 und bis 20 Kohlenstoffatomen, und daß die beiden Bindungsstellen nicht am selben C-Atom sind.

2. Selbstvernetzende wäßrige Polyurethandispersionen nach Anspruch 1, **dadurch gekennzeichnet, daß** die Polyurethane zusätzlich Bausteine enthalten abgeleitet von niedermolekularen Polyolen **C** mit Mₙ unter 400 g/mol.

3. Selbstvernetzende wäßrige Polyurethandispersionen nach Anspruch 1, **dadurch gekennzeichnet, daß** die Polyurethane zusätzlich Bausteine enthalten abgeleitet von Verbindungen **H,** die von **B, C, D, E, F** und **G** verschieden sind und mindestens zwei mit NCO-Gruppen reaktive Gruppen enthalten.

4. Selbstvernetzende wäßrige Polyurethandispersionen nach Anspruch 1, **dadurch gekennzeichnet, daß** die Verbindungen **F** ausgewählt sind aus 1-(4-Hydroxyphenyl)-3-butanon, 3-Acetyl-1-propanol, 4-Acetyl-1-butanol, und Dihydro-5-hydroxymethyl-2(3H)-furanon.

5. Selbstvernetzende wäßrige Polyurethandispersionen nach Anspruch 1, **dadurch gekennzeichnet, daß** als Vernetzungsmittel Dihydrazide von aliphatischen Dicarbonsäuren eingesetztwerden.

6. Verfahren zur Herstellung von selbstvernetzenden wäßrigen Polyurethandispersionen nach Anspruch 1, **dadurch gekennzeichnet, daß** aus den Polyisocyanaten **A,** den Polyolen gemäß **B,** den Verbindungen **F** und gegebenenfalls den niedermolekularen Polyolen C sowie den Verbindungen **D** zunächst ein Polyurethan-Präpolymeres hergestellt wird, das im Mittel mindestens 1,7 freie Isocyanatgruppen pro Molekül enthält, dieses Präpolymere dann mit den Verbindungen **E** und/oder **G** gegebenenfalls in Abmischung mit geringen Mengen an Verbindungen **H,** in einem nicht-wäßrigen System umgesetzt wird, wobei die Komponente **E** in einer solchen Menge eingesetzt wird, daß die Anzahl der Hydroxylgruppen in **E** größer ist als die Anzahl der Isocyanatgruppen in dem im ersten Schritt hergestellten Präpolymer, und das vollständig ausreagierte Polyurethanharz abschließend neutralisiert und ins wäßrige System überführt wird.

7. Verfahren nach Anspruch 6, **dadurch gekennzeichnet, daß** im ersten Schritt ein Polyurethan-Präpolymeres mit einem Staudinger-Index von mindestens **11** cm³/g hergestellt wird.

8. Wäßrige selbstvernetzende Beschichtungsmittel enthaltend selbstvemetzende wäßrige Polyurethandispersionen gemäß Anspruch 1.

9. Wäßrige selbstvemetzende Beschichtungsmittel nach Anspruch 8, **dadurch gekennzeichnet, daß** sie zusätzlich Härter ausgewählt aus blockierten Isocyanaten und Aminoplastharzen enthalten.

## Claims

1. Self-crosslinking aqueous polyurethane dispersions containing a crosslinking agent **I** selected from diamines **I1** and dihydrazides **I2** and polyurethanes with structural units derived from polyisocyanates **A,** polyols **B** having a number-average molar mass Mₙ of at least 400 g/mol, compounds **D** having at least two groups that are reactive towards isocyanates and at least one group that is capable of anion formation, low-molar-mass polyols **E** carrying no further groups that are reactive towards isocyanate groups, compounds **F** containing at least one group that is reactive towards isocyanate and at least one aldehyde-like or ketone-like carbonyl group, compounds **G** that are monofunctional with respect to isocyanates or contain active hydrogen of differing reactivity and that differ from compounds **E, characterised in that** the carbonyl groups incorporated into compound **F** are bound to the polymer chain in the polyurethane by means of a group -X-, **in that** the group -X- is selected from the group consisting of linear or branched or cyclic alkylene groups or aralkylene groups having at least 3 and up to 20 carbon atoms, and **in that** the two binding sites are not on the same C atom.

2. Self-crosslinking aqueous polyurethane dispersions according to claim 1, **characterised in that** the polyurethanes additionally contain structural units derived from low-molar-mass polyols **C** having a Mₙ of less than 400 g/mol.

3. Self-crosslinking aqueous polyurethane dispersions according to claim 1, **characterised in that** the polyurethanes additionally contain structural units derived from compounds **H,** which differ from **B, C, D, E, F** and **G** and contain at least two groups that react with NCO groups.

4. Self-crosslinking aqueous polyurethane dispersions according to claim 1, **characterised in that** the compounds F are selected from the group consisting of 1-(4-hydroxyphenyl)-3-butanone, 3-acetyl-1-propanol, 4-acetyl-1-butanol, and dihydro-5-hydroxymethyl-2(3H)-furanone.

5. Self-crosslinking aqueous polyurethane dispersions according to claim 1, **characterised in that** dihydrazides of aliphatic dicarboxylic acids are used as crosslinking agents.

6. A process for preparing self-crosslinking aqueous polyurethane dispersions according to claim 1, **characterised in that** a polyurethane prepolymer, containing on average at least 1.7 free isocyanate groups per molecule, is first prepared from polyisocyanates **A,** polyols according to **B,** compounds **F** and optionally the low-molar-mass polyols **C** and compounds **D,** this prepolymer is then reacted with compounds **E** and/or **G,** optionally mixed with small amounts of compounds **H,** in a non-aqueous system, wherein component **E** is used in an amount such that the number of hydroxyl groups in **E** is greater than the number of isocyanate groups in the prepolymer prepared in the first step, and the fully reacted polyurethane resin is finally neutralised and converted to the aqueous system.

7. A process according to claim 6, **characterised in that** a polyurethane prepolymer having a Staudinger Index of at least 11 cm³/g is prepared in the first step.

8. Aqueous self-crosslinking coating compounds containing self-crosslinking aqueous polyurethane dispersions according to claim 1.

9. Aqueous self-crosslinking coating compounds according to claim 8, **characterised in that** they additionally contain curing agents selected from blocked isocyanates and amino resins.

## Revendications

1. Dispersions de polyuréthane aqueuses auto-réticulantes contenant un agent de réticulation I choisi parmi les diamines I1 et les dihydrazides I2 et un polyuréthane comportant des éléments constitutifs dérivés de polyisocyanates A, des polyols B présentant une masse molaire moyenne en nombre Mₙ d'au moins 400 g/mol, des composés D qui présentent au moins deux groupes réactifs par rapport aux groupes isocyanate et au moins un groupe pouvant former des anions, des polyols E de basse masse molaire qui portent d'autres groupes réactifs par rapport aux groupes isocyanate, des composés F qui contiennent au moins un groupe réactif par rapport à l'isocyanate et au moins un groupe carbonyle de type aldéhyde ou cétone, des composés G qui sont monofonctionnels par rapport aux isocyanates ou contiennent des atomes de hydrogène actif de réactivité différente et qui sont différents des composés E, **caractérisées en ce que** les groupes carbonyle intégrés dans le composé F sont liés dans le polyuréthane par un groupe -X- sur la chaîne polymère, **en ce que** le groupe -X- est choisi parmi les groupes alkylène ou aralkylène linéaires ou ramifiés ou cycliques comportant au moins 3 et jusqu'à 20 atomes de carbone et **en ce que** les deux sites de liaison ne se trouvent pas sur le même atome de carbone.

2. Dispersions de polyuréthane aqueuses auto-réticulantes selon la revendication 1, **caractérisées en ce que** les polyuréthanes contiennent en outre des éléments constitutifs dérivés de polyols C de basse masse molaire présentant une Mₙ inférieure à 400 g/mol.

3. Dispersions de polyuréthane aqueuses auto-réticulantes selon la revendication 1, **caractérisées en ce que** les polyuréthanes contiennent en outre des éléments constitutifs dérivés des composés H qui sont différents de B, C, D, E, F et G et contiennent au moins deux groupes réactifs avec des groupes NCO.

4. Dispersions de polyuréthane aqueuses auto-réticulantes selon la revendication 1, **caractérisées en ce que** les composés F sont choisis parmi le 1-(4-hydroxyphényl)-3-butanone, le 3-acétyl-1-propanol, le 4-acétyl-1-butanol et le dihydro-5-hydroxyméthyl-2(3H)-furanone.

5. Dispersions de polyuréthane aqueuses auto-réticulantes selon la revendication 1, **caractérisées en ce que** l'on utilise comme agent de réticulation, des dihydrazides d'acides dicarboxylique aliphatiques.

6. Procédé de production de dispersions de polyuréthane aqueuses auto-réticulantes selon la revendication 1, caractérisé en ce l'on produit tout d'abord un prépolymère de polyuréthane qui contient en moyenne au moins 1,7 groupes isocyanate libres par molécule à partir des polyisocyanates A, des polyols B, des composés F et éventuellement des polyols C de basse masee molaire et des composés D, ce prépolymère est ensuite converti avec les composés E et/ou G éventuellement en mélange avec de faibles quantités de composés H en un système non aqueux, les composants E étant intégrés en une quantité telle que le nombre de groupes hydroxyle dans E soit supérieur au nombre de groupes isocyanate dans le prépolymère produit à la première étape, et la résine de polyuréthane ayant complètement réagi est ensuite neutralisée et convertie en système aqueux.

7. Procédé selon la revendication 6, **caractérisé en ce que**, dans la première étape, un prépolymère de polyuréthane est produit, présentant un indice de Staudinger d'au moins 11 cm³/g.

8. Agents de revêtement auto-réticulants aqueux contenant des dispersions de polyuréthane aqueuses auto-réticulantes selon la revendication 1.

9. Agents de revêtement auto-réticulants aqueux selon la revendication 8, **caractérisés en ce qu'**ils contiennent en outre des durcissants choisis parmi les isocyanates bloqués et les résines aminoplastes.
